(19) Europäisches Patentamt
European Patent Office
Office européen des brevets

(11) **EP 3 598 598 B1**

(12) **FASCICULE DE BREVET EUROPEEN**

(45) Date de publication et mention de la délivrance du brevet:
**14.04.2021 Bulletin 2021/15**

(51) Int Cl.:
***H02J 3/12*** *(2006.01)*    ***H02J 3/38*** *(2006.01)*
***G06F 17/11*** *(2006.01)*    ***G06Q 50/06*** *(2012.01)*

(21) Numéro de dépôt: **19186676.3**

(22) Date de dépôt: **17.07.2019**

(54) **PROCÉDÉ ET SYSTÈME DE DÉTERMINATION D'UN ÉTAT EN TENSION D'UN RÉSEAU DE DISTRIBUTION BASSE TENSION AU NIVEAU D'AU MOINS UN POSTE DE TRANSFORMATION**

VERFAHREN UND SYSTEM ZUR BESTIMMUNG EINES SPANNUNGSZUSTANDS EINES AN WENIGSTENS EINER TRANSFORMATORSTATION LIEGENDEN NIEDERSPANNUNGSNETZES

METHOD AND SYSTEM FOR DETERMINING A VOLTAGE STATE OF A LOW VOLTAGE POWER SUPPLY NETWORK LOCATED AT AT LEAST ONE TRANSFORMER STATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2018 FR 1856635**

(43) Date de publication de la demande:
**22.01.2020 Bulletin 2020/04**

(73) Titulaire: **Electricité de France**
**75008 Paris (FR)**

(72) Inventeurs:
• **RIADH, Zorgati**
**92260 FONTENAY AUX ROSES (FR)**
• **MINOUX, Michel**
**75013 PARIS (FR)**
• **CROTEAU, Dominique**
**78500 Sartrouville (FR)**

(74) Mandataire: **Plasseraud IP**
**66, rue de la Chaussée d'Antin**
**75440 Paris Cedex 09 (FR)**

(56) Documents cités:
EP-A1- 2 874 273     US-A1- 2005 160 128
US-A1- 2007 203 658     US-A1- 2012 022 713
US-A1- 2017 141 572     US-A1- 2018 158 152

**Description**

L'invention concerne un procédé d'évaluation de la tension dans la branche basse tension d'un réseau de distribution d'électricité, afin d'y réguler la tension pour la maintenir dans les plages de tension réglementaires, notamment lorsque des générateurs d'énergies renouvelables, induisant des fluctuations de tension, y sont connectés.

La gestion d'un réseau de distribution a pour objet de piloter de manière optimale son fonctionnement afin de minimiser les pertes, maîtriser les fluctuations de tension, et garantir ainsi une continuité de service dans des conditions économiques raisonnables. Or, la gestion du réseau électrique de distribution est amenée à évoluer profondément en raison de nombreux facteurs. Ces facteurs comprennent notamment le développement de nouveaux moyens décentralisés de production d'électricité dé-carbonée, fondée sur l'utilisation de sources d'énergies primaires renouvelables, l'évolution des usages de l'électricité, par exemple avec l'apparition des véhicules électriques, l'évolution des modes de consommation, par exemple en différant certaines consommations pour réduire la facture énergétique ou encore l'apparition de nouveaux acteurs sur le marché de l'énergie.

Les moyens de production décentralisée, ou « générateurs d'énergie dispersée GED », peuvent être gérés par des producteurs indépendants. Les moyens de production décentralisée se caractérisent par le fait qu'ils sont de puissance limitée et souvent raccordés au réseau de distribution. En se situant au plus près des points de consommation, ces moyens permettent de diminuer le coût de transport de l'énergie, les transits de puissance active au niveau du poste source et ainsi les pertes en ligne sur le réseau de transport. Toutefois, la connexion des moyens de production décentralisée sur le réseau de distribution pose de nouveaux problèmes d'exploitation, notamment la difficulté de tenir le plan de tension, c'est-à-dire les valeurs de tension dans les plages réglementaires.

Actuellement, le niveau de tension dans un réseau de distribution est fonction des quantités d'injection et de soutirage ayant lieu sur ce réseau. Autrement dit, le niveau de tension est fonction de la production et de la consommation en tension sur ce réseau. Une injection a pour effet d'augmenter la tension alors qu'un soutirage a pour effet de la faire baisser. Afin de respecter les normes sur la qualité de tension, la tension distribuée doit être maintenue entre deux niveaux de prescription, définis contractuellement. Chaque réseau haute-tension et basse tension dispose de ses propres plages. Le maintien de la tension dans les plages permises permet, d'assurer la sécurité des personnes et des biens, d'assurer le bon fonctionnement des différents appareils connectés au réseau et de limiter les pertes par effet Joule dans le réseau.

Le réseau de distribution est un réseau arborescent dont les caractéristiques des lignes sont connues. Pour y réguler la tension, le gestionnaire de réseau actionne des dispositifs de contrôle-commande tels que le régleur en charge au poste HTB/HTA qui permettent d'ajuster le rapport de transformation haute tension/basse tension entre le réseau de transport et le réseau de distribution. Tant que les puissances injectées par les générateurs d'énergie dispersés sur ce réseau sont **peu** nombreuses et faibles, les perturbations induites sur la tension aux différents nœuds du réseau sont faibles, localisées, et peuvent être compensées par cette technique de régulation de la tension.

Dans un contexte de transition énergétique, le fort développement de nouveaux moyens décentralisés de production d'électricité d'origine renouvelable, utilisés par un très grand nombre d'acteurs va entrainer, sur le réseau basse tension, un grand nombre d'injections d'énergie renouvelable, induisant ainsi des fluctuations de la tension sur le réseau dépassant les seuils légaux, ne pouvant être traitées avec les techniques de régulation actuelles dans des conditions économiques satisfaisantes.

La technique actuelle de régulation de la tension sur le réseau de distribution se fait par une mesure locale de la tension, une consigne fixe de tension et un ajustement du rapport de transformation au niveau du poste-source HTB/HTA.

Le brevet français FR 33006819 vise à perfectionner cette technique par détermination de l'état en tension du réseau HTA, en utilisant les équations de Kirchhoff, en aval du poste-source et une consigne variable en lieu et place de la consigne fixe.

Le procédé proposé vise à proposer une régulation de tension au niveau HTA/BT en améliorant la détermination de l'état en tension du réseau au moyen d'une procédure de résolution plus précise et plus stable et fiable des équations de Kirchhoff.

Est également connu le document US2012/022713 qui décrit un système de simulation d'un flux de puissance pour contrôler ce flux de puissance dans un réseau de distribution.

Le document US2018/158152 décrit une méthode de calcul pour déterminer un flux de puissance optimal dans un réseau de distribution. La méthode comprend la formulation de circuits équivalents jusqu'à obtenir une solution qui converge, correspondant à un minimum global. Le document EP2874273 décrit une méthode de contrôle d'un état en puissance d'un système par mesures de puissance effectuées par des capteurs. Le document US2005/160128 décrit une méthode pour analyser la puissance d'un système sur la base d'une méthode de mesure synchronisée pour répondre au problème de répartition des charges, utilisant des équations non linéaires. Le document US2007/203658 décrit une méthode de résolution du problème de la répartition des charges en utilisant la méthode de Gauss-Seidel-Patel. Le document US2017/141572 décrit une méthode pour conserver le voltage d'un système dans une gamme souhaitée.

Toutefois, aucun de ces documents ne propose une solution fiable et précise pour la régulation en tension d'une branche basse tension.

La présente invention vient améliorer la situation.

L'invention est définie par les revendications indépendantes 1 et 12. Les modes particuliers de réalisation sont définis par les revendications dépendantes.

A cet effet, elle propose un procédé mis en œuvre par des moyens informatiques, de détermination d'un état en tension d'un réseau de distribution d'électricité comprenant au moins une branche basse tension, et au moins une branche haute tension, la branche basse tension comprenant une pluralité de nœuds au niveau desquels ledit état en tension est à déterminer, la détermination dudit état en tension étant réalisée au niveau d'au moins un poste de transformation, la détermination de l'état en tension servant à réguler la tension sur le réseau basse tension, le procédé comprenant:

- une définition d'une valeur d'une tension cible réelle pour chaque nœud, ladite tension cible réelle représentant la valeur en tension à atteindre par la régulation;
- une estimation d'une puissance active et d'une puissance réactive pour chaque nœud;
- une construction d'un premier système d'équations de Kirchhoff liant des tensions complexes aux puissances actives et réactives de la pluralité de nœuds,
- une formulation respective desdites puissances actives et réactives sous la forme d'une fonction quadratique pour chaque nœud, lesdites fonctions quadratiques liant des tensions complexes de la pluralité des nœuds à des matrices symétriques complexes issues d'une matrice d'admittance complexe du réseau, lesdites fonctions quadratiques étant substituées dans le premier système d'équations de manière à obtenir un deuxième système d'équations en nombre réels, équivalent au premier système d'équations,
- formulation d'un problème d'optimisation sous forme d'une fonction auxiliaire issue du deuxième système d'équations dont une solution optimale approchée, notamment un minimum global de ladite fonction auxiliaire, correspond à une solution du deuxième système d'équations,

le procédé comprenant:

- une minimisation itérative de ladite fonction auxiliaire, dont une solution initiale à la première itération est la tension cible, jusqu'à obtenir une approximation du minimum global de ladite fonction auxiliaire représentant une solution au voisinage du minimum global de ladite fonction auxiliaire,
- et une application au deuxième système d'équations d'une méthode itérative par linéarisations successives, ayant comme solution initiale à la première itération ledit minimum global approché, jusqu'à obtenir une valeur d'une tension complexe en chaque nœud.

De cette manière, le procédé permet une précision de résultat très importante avec peu de ressources en calcul.

Selon une réalisation, le procédé comprend en outre :

- un calcul d'une variation entre la valeur de ladite tension cible réelle et la valeur d'un module de ladite tension complexe en chaque nœud; et

  ➢ si ladite variation est inférieure à une valeur absolue d'un premier seuil, aucune action de régulation n'est entreprise,

  ➢ si ladite variation en valeur absolue est comprise entre le premier seuil et le deuxième seuil, la valeur absolue du deuxième seuil étant supérieure à la valeur absolue du premier seuil, une détermination de consignes de tension à appliquer au poste de transformation du réseau de manière à ramener la tension complexe en chaque nœud de la branche basse tension entre des valeurs de contrainte de tension maximale et minimale ; et une transmission des consignes de tension au poste de transformation,

  ➢ si ladite variation en valeur absolue est supérieure au deuxième seuil, le procédé est relancé.

Ainsi, le procédé est relancé lorsqu'une valeur aberrante est obtenue en sortie. Le procédé est alors très efficace puisque les valeurs aberrantes ne sont pas prises en compte. De plus, une nouvelle valeur de consigne est déterminée à chaque cycle ce qui permet de contrôler l'état en tension du réseau.

Selon une réalisation, la valeur absolue du premier seuil est égale à 10% de la valeur de la tension cible réelle, et la valeur absolue du deuxième seuil est égale à 15% de la valeur de la tension cible réelle.

Cela permet de définir les conditions de fonctionnement normal du réseau. En dehors de ces seuils, la solution obtenue est déterminée comme étant aberrante ou une situation d'effondrement de tension est détectée.

Selon une réalisation, les puissances actives et réactives en chaque nœud de la branche basse tension sont déterminées :

- en fonction de mesures réelles fournies par au moins un compteur électrique relié au nœud associé de la branche basse tension, ou
- en fonction d'un modèle de charge de consommateurs.

Ainsi, les puissances actives et réactives sont obtenues de manière précise, en chaque nœud et en prenant en compte des différences selon les profils des utilisateurs. Notamment, ces différences comprennent les contrats propres à chaque utilisateur, l'utilisation de générateurs d'énergie...

Selon une réalisation, les étapes du procédé sont répétées à chaque intervalle de temps, de préférence inférieur à trente minutes, et de préférence inférieur à dix minutes.

Ainsi, cela permet de pouvoir relancer le procédé dans un intervalle de temps suffisamment court pour que les valeurs de consigne soient efficaces. Autrement dit, de sorte que la tension obtenue en sortie ne soit pas devenue obsolète.

Selon une réalisation, la fonction auxiliaire est choisie de sorte qu'un minimum global de valeur 0 de ladite fonction auxiliaire est une solution du deuxième système d'équations, ladite fonction auxiliaire étant à valeur réelle positive ou nulle.

Ainsi, le procédé permet de prendre en considération la non-linéarité des systèmes d'équations.

Selon une réalisation, une résolution du deuxième système d'équations comprend la minimisation de la fonction auxiliaire par une méthode itérative comprenant, à chaque itération, une recherche d'une direction de descente puis une minimisation unidimensionnelle de la fonction auxiliaire jusqu'à obtenir la solution au voisinage du minimum global.

Selon une réalisation, la direction de descente est trouvée, à chaque itération, par une résolution d'un problème d'optimisation à objectif quadratique convexe sous contraintes linéaires.

Selon une réalisation, la méthode itérative de linéarisations successives comprend, à chaque itération :

➢ une résolution d'une approximation linéaire du deuxième système d'équations au voisinage d'une solution obtenue à l'itération précédente, laquelle définit une direction de déplacement dans l'espace des solutions, et

➢ une minimisation unidimensionnelle de la fonction auxiliaire dans cette direction de déplacement.

Selon une réalisation, la valeur de la tension complexe est obtenue avec un degré de précision compris entre $10^{-6}$ et $10^{-15}$.

Le procédé permet donc d'obtenir des valeurs de la tension complexe extrêmement précises.

Selon une réalisation, les nombres d'itérations pour la résolution de la fonction auxiliaire et d'itérations de la méthode de linéarisations successives sont chacun inférieurs à 20, de préférence inférieurs à 15, et de préférence égaux à 12.

Ainsi, la très grande précision des valeurs de la tension complexe est obtenue avec un nombre très réduit d'itérations. Le procédé est donc rapide, efficace et peu coûteux en ressources de calcul.

La présente invention vise aussi un système de détermination d'un état en tension d'un réseau de distribution d'électricité comprenant au moins une branche basse tension, et au moins une branche haute tension, la branche basse tension comprenant une pluralité de nœuds au niveau desquels ledit état en tension est à déterminer, la détermination dudit état en tension étant réalisée au niveau d'au moins un poste de transformation, la détermination dudit état en tension servant à réguler la tension sur le réseau basse tension, le système étant caractérisé par: un circuit de traitement configuré pour la mise en œuvre du procédé selon l'invention.

D'autres avantages et caractéristiques de l'invention apparaitront à la lecture de la description détaillée ci-après d'exemples de réalisation de l'invention, et à l'examen des dessins annexés sur lesquels :

la figure 1 illustre schématiquement le contexte dans lequel se place la présente invention,

la figure 2 représente schématiquement un système de détermination d'un état en tension d'un réseau de distribution basse tension au niveau d'au moins un poste de transformation, la branche basse tension comprenant une pluralité de nœuds, selon un exemple de réalisation.

la figure 3 est un ordinogramme illustrant les principales étapes du procédé de détermination d'un état en tension d'un réseau de distribution basse tension au niveau d'au moins un poste de transformation, la branche basse tension comprenant une pluralité de nœuds, selon un exemple de réalisation.

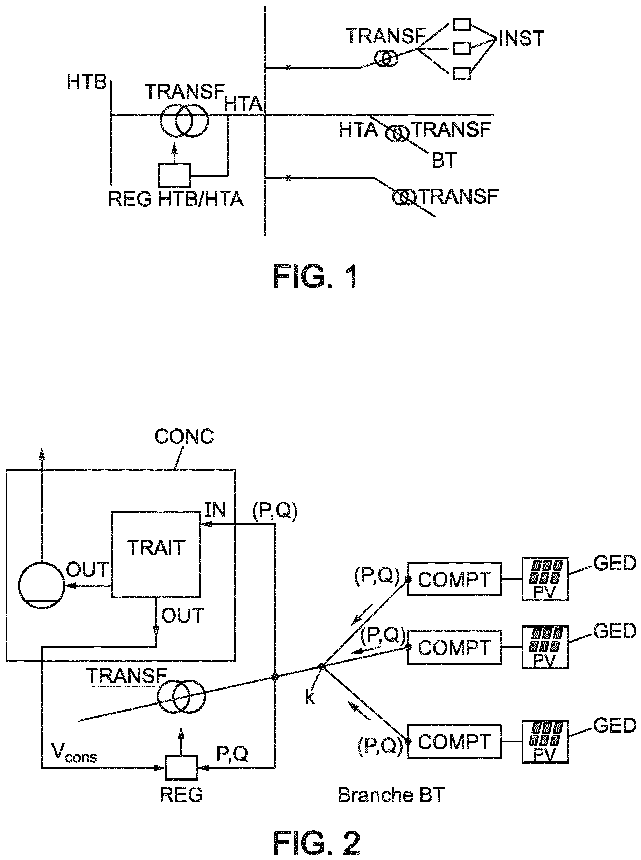

La figure 1 illustre un réseau de distribution d'électricité comprenant au moins une branche basse tension BT et au moins une branche haute tension HTA, HTB. Le réseau de distribution est un réseau arborescent comprenant une pluralité de nœuds au niveau desquels l'état en tension est à déterminer.

La branche haute tension HTA est une branche dans laquelle la tension est comprise entre 1 kilovolt et 50 kilovolts en courant alternatif, et comprise entre 1.5 kilovolt et 75 kilovolts en courant continu. La branche haute tension HTB est une branche dans laquelle la tension excède 50 kilovolts en courant alternatif et 75 kilovolts en courant continu. La tension dans la branche basse tension est comprise entre 50 volts et 1 kilovolt.

Les branches haute tension et basse tension sont reliées à une pluralité d'installations INST, typiquement des habitations, des entreprises, des centrales électriques, etc. Le réseau électrique est ponctué de transformateurs et de régleurs en charge, permettant de récolter les données de consommation et de production d'électricité et de réguler la tension sur le réseau. Dans la présente application, seule la tension sur la branche basse tension est à déterminer et à réguler.

La figure 2 illustre plus précisément un système de détermination d'un état en tension d'un réseau de distribution basse tension.

La branche du réseau représentée sur la figure 2 est la branche basse tension. Une pluralité de générateurs d'énergie dispersée GED sont reliés au réseau. Les générateurs d'énergie dispersée GED sont par exemple des générateurs d'énergie renouvelable, tels que des installations photovoltaïques ou éoliennes. Les générateurs GED peuvent être des installations appartenant à des particuliers, branchées sur le réseau. Des compteurs électriques intelligents COMPT peuvent être reliés à chacun des générateurs, de sorte que les puissances actives et réactives P, Q peuvent être obtenues en chaque nœud k du réseau.

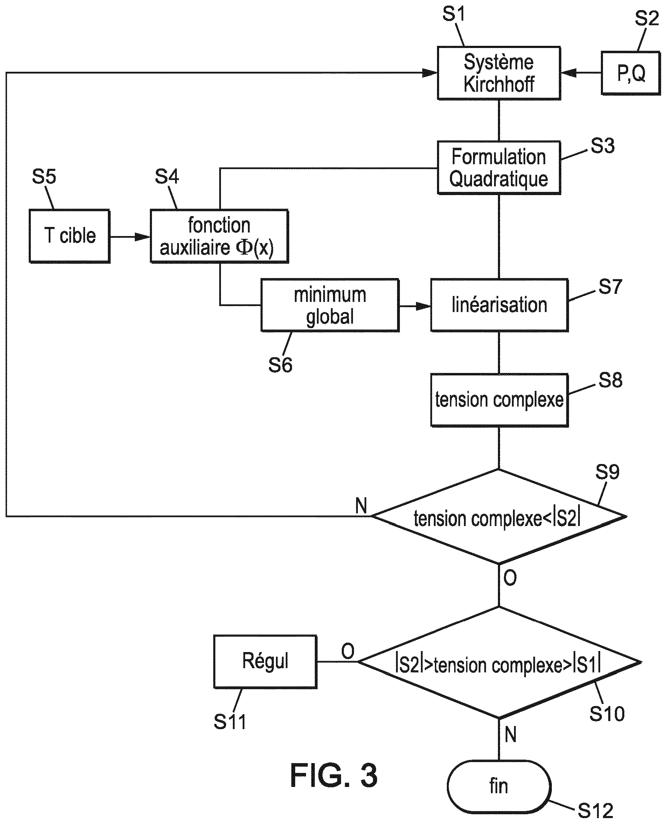

En variante, les puissances actives et réactives P, Q sont obtenues au moyen d'un modèle de charge propre à chaque utilisateur du réseau. Les puissances actives et réactives P, Q peuvent être transférées par courants porteurs en ligne jusqu'au transformateur TRANSF. Ces valeurs sont ensuite transmises vers le concentrateur CONC comprenant une unité de traitement TRAIT. Plus précisément, l'unité de traitement TRAIT reçoit en entrée les données récoltées en chaque nœud du réseau. L'unité de traitement TRAIT est configurée de manière à mettre en œuvre les étapes du procédé décrites ci-après en référence à la figure 3. L'unité de traitement TRAIT délivre donc en sortie la tension complexe en chaque nœud de la branche basse tension, lorsqu'elle appartient à la plage de tensions contractuelle. L'unité de traitement TRAIT peut également délivrer en sortie la valeur de consigne à appliquer pour réguler l'état en tension le cas échéant. La valeur de consigne est envoyée vers le régleur en charge basse tension REG, qui reçoit également les puissances actives et réactives P, Q. Le régleur en charge basse tension REG permet de réguler l'état en tension du réseau afin que la tension en chaque nœud soit comprise dans la plage de tensions contractuelle.

Dans le cadre de l'exemple de réalisation illustré sur la figure 3, on considère un réseau de distribution basse tension à structure arborescente donc l'ensemble des nœuds $N = \{1,2, ..., n\}$ est décomposé en $N = \{1\} \cup N_{PQ}$, avec $\{1\}$ le bus de référence et $N_{PQ}$ est le sous-ensemble de nœuds de consommation et/ou de production ; la charge en un nœud $k \in N_{PQ}$ étant caractérisée par la puissance active $P_k$ et la puissance réactive $Q_k$.

La tension en chaque nœud du réseau de distribution est calculée en fonction des puissances actives et réactives injectées ou soutirées dans chaque nœud. Cela est effectué au moyen de la résolution des équations dites « de Kirchhoff », ou résolution de problème du calcul de la répartition des charges, communément appelé problème du « load flow ». Les équations de Kirchhoff permettent de lier une tension complexe aux puissances actives et réactives du nœud associé. La construction du système d'équations de Kirchhoff est réalisée de manière connue, pour obtenir le premier système d'équations (I) qui suit, à l'étape S1 :

$$S_k = P_k + i\,Q_k = [\,\text{diag}(V)(YV)^*\,]_k \quad (k=1,...n)$$

$$V_1 = \overline{V}_1$$

$$\theta_1 = 0$$

$$S_k = \overline{S}_k \quad (\forall\,k \in N_{PQ}\,),$$

Avec $S_k$ la puissance complexe injectée en chaque nœud k, $P_k$ et $Q_k$ les puissances actives et réactives, données, en chaque nœud k, V est le vecteur des tensions complexes en chaque nœud k, $V_1$ la tension complexe au nœud de référence et $\theta_1$ la phase en ce même nœud de référence. Y est la matrice d'admittance complexe du réseau.

A l'étape S2, les puissances actives et réactives P, Q, injectées en chaque nœud du réseau, sont estimées. Plus précisément, le bilan de consommation et de production de chaque client est déterminé, de manière à obtenir les puissances actives et réactives P, Q. Notamment, et comme illustré sur la figure 2, les puissances actives et réactives P, Q peuvent être directement fournies au moyen de compteurs électriques intelligents COMPT. Ces données transitent par exemple par courant porteur en ligne et sont transférées à un concentrateur CONC du poste de transformateur en tension TRANSF. Les données sont récupérées au niveau du concentrateur CONC. En variante, une mesure de tension peut être faite au niveau de chaque poste de distribution par le concentrateur CONC. Lorsque des clients ne possèdent pas de compteurs électriques intelligents COMPT, les données peuvent être estimées au moyen d'un modèle d'estimation de charge ou de profil de production. Les puissances actives et réactives peuvent être estimées à chaque intervalle de temps, par exemple au moins égal à 30 minutes et de préférence égal à 10 minutes.

A partir des valeurs des puissances actives et réactives P, Q il est possible d'évaluer l'état en tension de chaque nœud du réseau de manière précise. Toutefois, les valeurs en tension dans le réseau électrique basse tension ne dépendent pas linéairement des puissances soutirées ou injectées par les générateurs d'énergies renouvelables GED. Aussi, le premier système d'équations, comprenant les équations de Kirchhoff, est reformulé de manière à pouvoir déterminer l'état en tension de chaque nœud.

Plus précisément, les puissances actives et réactives sont reformulées sous la forme d'une fonction quadratique pour chaque nœud. Ces fonctions quadratiques se substituant aux puissances actives et réactives dans le premier système d'équations à l'étape S3 pour obtenir un deuxième système d'équations en nombres réels. Cette substitution est fondée sur le fait que pour chaque $k \in N_{PQ}$, la partie réelle $P_k$ de la puissance injectée/soutirée au nœud k peut être exprimée comme une fonction quadratique: $R^{2n} \rightarrow R$ de la forme $x^T A_k x$. De la même manière, la partie imaginaire $Q_k$ peut être exprimée comme une fonction quadratique: $R^{2n} \rightarrow R$ de la forme $x^T B_k x$, où x est le vecteur de dimension 2n dont les composantes 1 à n sont les parties réelles des tensions aux nœuds 1,...,n et les composantes n+1 à 2n sont les parties imaginaires. $A_k$ et $B_k$ sont respectivement les matrices symétriques réelle et imaginaire $2n \times 2n$, déduites de la matrice d'admittance Y complexe du réseau de la manière suivante. Pour tout i=1,...n, $Y_{[k]}$ est la matrice nxn ayant toutes ses lignes nulles sauf la ligne k égale à la k$^{ème}$ ligne de Y. R et C sont les parties réelle et complexe de $Y_{[k]}$ et $\Phi_k$ et $\Psi_k$ sont les matrices 2n×2n:

$$\Phi_k = \begin{vmatrix} R & -C \\ C & R \end{vmatrix}$$

$$\Psi_k = \begin{vmatrix} -C & -R \\ R & -C \end{vmatrix}$$

Les matrices $A_k$ et $B_k$ peuvent alors être réécrites comme suit : $A_k = 0.5 \times (\Phi_k + \Phi_k^T)$ et $B_k = 0.5 \times (\Psi_k + \Psi_k^T)$.

Ainsi, résoudre le système (I) se reformule comme la recherche d'une solution au deuxième système d'équations:

$$x^T A_k x = \overline{P_k} \qquad (\forall\ k=2,...n)$$

$$x^T B_k x = \overline{Q_k} \qquad (\forall\ k=2,...n)$$

$$x_1 = \overline{V_1}$$

$$x_{n+1} = 0$$

La résolution du deuxième système d'équations décrit ci-avant comprend deux phases. La première phase est décrite en référence aux étapes S4 à S6. La deuxième phase est décrite en référence à l'étape S7. Chacune des deux phases comprend un calcul itératif permettant de résoudre avec précision les équations du deuxième système, tout en contrôlant chaque étape de la résolution.

Avantageusement, le degré très important de précision est obtenu suite à la minimisation itérative d'une fonction auxiliaire, déterminée à l'étape S4. Plus précisément, plutôt que de résoudre le deuxième système d'équation directement, un problème d'optimisation est formulé, dont une solution optimale approchée peut servir de solution initiale à la deuxième phase.

La fonction auxiliaire est formulée comme suit :

$$\Phi\,(x) = \text{Max}\,\{\,\text{Max}_{i=1,...n}\,|x^T A_k\,x\,-\,P_k\,|\,;\,\text{Max}_{i=1,...n}\,|x^T B_k\,x\,-\,Q_k\,|\,\}$$

L'équivalence entre la résolution du deuxième système d'équations et la minimisation de la fonction auxiliaire $\Phi\,(x)$ découle du fait que la fonction auxiliaire $\Phi\,(x)$ est partout réelle, positive ou nulle, et qu'elle s'annule en toute solution du deuxième système d'équations. Autrement dit, toute solution du deuxième système d'équations correspond à un minimum global de la fonction auxiliaire, lorsque celle-ci comprend plusieurs minima globaux de valeur nulle, chacun de ces minima est solution du deuxième système d'équations.

La minimisation de la fonction auxiliaire n'a toutefois pas pour but de déterminer un minimum global précis. Une approximation d'un minimum global est suffisante pour obtenir un résultat permettant de servir de solution initiale à la phase 2. Aussi, une solution de la minimisation de la fonction auxiliaire dont la valeur est suffisamment proche de 0 est suffisante. Ainsi on se contente en phase 1 d'une solution au voisinage d'un minimum global de la fonction auxiliaire. La deuxième phase du procédé permet quant à elle d'obtenir l'état en tension de manière très précise. Aussi un nombre réduit d'itérations permet d'obtenir une solution satisfaisante. Dans la suite de la description, le terme « minimum global » est utilisé bien qu'il soit entendu qu'il peut s'agir d'une approximation de ce minimum global.

Par exemple, le nombre d'itérations pour la phase 1 est inférieur à 20, de préférence inférieur à 15, et de préférence égal à 12. Cela permet donc de limiter les ressources en calcul nécessaires car une approximation du minimum global est atteinte avec un nombre réduit d'itérations. Ce nombre réduit d'itérations permet de diminuer sensiblement la valeur de la fonction auxiliaire $\Phi\,(x)$ par rapport à sa valeur initiale $\Phi\,(x0)$.

Afin d'obtenir une précision et une valeur de l'état en tension en chaque nœud du réseau qui soient satisfaisantes, une tension-cible réelle Tcible, ou « tension-cible Tcible » est utilisée comme solution initiale de la fonction auxiliaire. Plus précisément, la tension-cible Tcible est utilisée comme solution à la première itération de la minimisation de la fonction auxiliaire.

La tension Tcible est définie à l'étape S5. La tension Tcible est une valeur idéale de la tension en chacun des nœuds. C'est la valeur en tension qu'il s'agit d'atteindre par le procédé de régulation selon l'invention. Plus précisément, la tension cible Tcible prend la forme d'un vecteur dont le nombre de composants est égal au nombre de nœuds. La tension cible Tcible peut être la même pour chaque nœud du réseau. En variante, la tension cible Tcible n'est pas la même en chaque nœud. Cela peut être dû à des évolutions des valeurs de tensions contractuelles, pouvant différer selon les clients du réseau. Ainsi, la valeur initiale de la fonction auxiliaire $\Phi\,(x)$ est $\Phi\,(x0)$, avec x0 réel correspondant à Tcible complexe.

Pour la résolution du problème d'optimisation formulé à travers la fonction auxiliaire $\Phi\,(x)$, plusieurs méthodes peuvent être utilisées. Par exemple, une méthode de gradient projeté peut être utilisée.

Plus précisément, à chaque itération t, deux opérations sont effectuées. La première itération t0 comprend la détermination d'une direction de descente d de la fonction auxiliaire $\Phi\,(x)$ au point courant $x^{t-1}$. La détermination de la direction de descente d peut être formulée et résolue comme un problème d'optimisation à objectif quadratique convexe sous contraintes linéaires.

La deuxième opération comprend la détermination d'un nouvel itéré $x^t$ comme minimum exact ou approché de la fonction auxiliaire $\Phi\,(x)$ sur la demi-droite issue de $x^{t-1}$ et de la direction de descente d.

Toutefois, la fonction auxiliaire $\Phi\,(x)$ n'est pas partout différentiable. Il n'est donc pas possible d'utiliser comme direction de descente la direction opposée au gradient au point courant. Ainsi, dans l'exemple de réalisation, une direction de descente d = u est définie au point courant $x^{t-1}$, avec u la solution optimale d'un problème d'optimisation. Plus précisément la minimisation de la fonction auxiliaire $\Phi\,(x)$ est réalisée par la minimisation de la valeur $\|\,u\,\|^2$ sous les contraintes suivantes :

$$-\,2\,(A_k\,x^{t-1})^T\,u\,\leq \Phi(x^{t-1}).(1-\varepsilon)-(x^{t-1})^T A_k\,x^{t-1}+P_k\quad\text{si}\ \ k\in I^+$$

$$2\,(A_k\,x^{t-1})^T\,u\,\leq \Phi(x^{t-1}).(1-\varepsilon)+(x^{t-1})^T A_k\,x^{t-1}-P_k\quad\text{si}\ \ k\in I^-$$

$$-\,2\,(B_k\,x^{t-1})^T\,u\,\leq \Phi(x^{t-1}).(1-\varepsilon)-(x^{t-1})^T B_k\,x^{t-1}+Q_k\quad\text{si}\ \ k\in J^+$$

$$2\,(B_k\,x^{t-1})^T\,u\,\leq \Phi(x^{t-1}).(1-\varepsilon)+(x^{t-1})^T B_k\,x^{t-1}-Q_k\quad\text{si}\ \ k\in J^-$$

$$M.u = 0,$$

où $\varepsilon$ est un paramètre choisi dans l'intervalle ] 0, 1];

$I^+$ est l'ensemble des k tels que $(x^{t-1})^T A_k x^{t-1} - P_k > \Phi(x^{t-1}).(1 - \varepsilon)$

$I^-$ est l'ensemble des k tels que $(x^{t-1})^T A_k x^{t-1} - P_k < -\Phi(x^{t-1}).(1 - \varepsilon)$

$J^+$ est l'ensemble des k tels que $(x^{t-1})^T B_k x^{t-1} - Q_k > \Phi(x^{t-1}).(1 - \varepsilon)$

$J^-$ est l'ensemble des k tels que $(x^{t-1})^T B_k x^{t-1} - Q_k < -\Phi(x^{t-1}).(1 - \varepsilon)$

Une fois que la solution optimale u a été déterminée, l'itéré $x^t$ est obtenu par la minimisation unidimensionnelle de la fonction auxiliaire $\Phi(x)$ dans la direction d=u, à chaque nouvelle itération t.

Cette méthode particulière de minimisation de la fonction auxiliaire permet d'être peu coûteuse en ressources de calcul. Un minimum global de la fonction auxiliaire $\Phi(x)$ est ainsi déterminé à l'étape S6.

Le minimum global sert de solution initiale à la deuxième phase. Ainsi, la mise en œuvre de deux phases successives, dont la solution finale de la première phase est la solution initiale de la deuxième phase, permet de faire converger le procédé et ainsi déterminer avec une précision élevée l'état en tension du réseau en chaque nœud.

Plus précisément, la deuxième phase comprend une méthode itérative, procédant par linéarisations successives du deuxième système d'équations, étape S7. A chaque itération t, où $x^{t-1}$ est l'itéré courant, le système linéaire, obtenu par linéarisation du deuxième système d'équations, est résolu en x. Le système linéaire peut être écrit comme suit.

$$2 A_k (x-x^{t-1}) = P_k - (x^{t-1})^T A_k x^{t-1} \qquad (k=1, 2, ...n, \ k \neq ref)$$

$$2 B_k (x-x^{t-1}) = Q_k - (x^{t-1})^T Q_k x^{t-1} \qquad (k=1, 2, ...n, \ k \neq ref)$$

$$M x = h,$$

où M est la matrice à deux lignes et 2n colonnes, dont la première ligne a toutes ses composantes nulles exceptées M(1, ref) = 1, et la deuxième ligne a toutes ses composantes nulles exceptée M(2, ref+n) = 1. Le vecteur h est le vecteur colonne dont la première composante est égale à Vref, et la deuxième composante est nulle, et ref désigne le nœud de référence.

La méthode de linéarisations utilisée est choisie parmi une méthode de Newton, une méthode quasi-Newton ou une méthode Gauss-Seidel.

Avec y comme solution du système linéaire, l'itéré suivant $x^t$ est obtenu comme solution minimisant la fonction auxiliaire $\Phi(x)$ du problème d'optimisation sur la demi-droite $x^{t-1}$ et de vecteur directeur $d = y - x^{t-1}$. La minimisation unidimensionnelle effectuée lors de l'étape S7 permet d'accroître sensiblement la rapidité de convergence du procédé. Typiquement, quelques dizaines d'itérations, de préférence entre 15 et 20 itérations, permettent d'obtenir un état en tension en chaque nœud d'un réseau comprenant plus d'une dizaine de nœuds, avec une précision de l'ordre de $10^{-6}$ à $10^{-15}$. La tension complexe en chaque nœud du réseau est ainsi obtenue à l'étape S8.

Les étapes S9 à S12 sont des étapes permettant de réguler la tension sur le réseau basse tension, lorsque cela est nécessaire, en fonction de la tension complexe obtenue à l'étape S8.

Plus précisément, une comparaison entre la valeur de tension cible et la valeur d'un module de la tension complexe en chaque nœud est effectuée. La différence est ensuite comparée à des seuils choisis. Plus précisément, un premier seuil U1 et un deuxième seuil U2 sont définis. La valeur absolue du deuxième seuil U2 est plus grande que la valeur absolue du premier seuil U1.

La comparaison entre la variation et les seuils choisis permet de déterminer si une régulation en tension doit être effectuée.

La comparaison entre la différence en tension et le deuxième seuil U2, à l'étape S9, permet de déterminer si la tension complexe déterminée à l'étape S8 est hors des limites admissibles. Si la différence entre la tension complexe en chaque nœud et la tension cible est supérieure au deuxième seuil U2, il est déterminé que c'est un résultat ors des limites admissibles. Le procédé est relancé au cycle suivant sans action supplémentaire.

S'il est déterminé que la variation entre la tension complexe en chaque nœud et la tension cible est comprise entre les valeurs absolues du deuxième et du premier seuils U1, U2, tel qu'illustré à l'étape S10, une régulation en tension a lieu à l'étape S11. Plus précisément, des consignes de tension, à appliquer au poste de transformation du réseau, sont déterminées de manière à ramener le module de la tension complexe en chaque nœud de la branche basse tension entre des valeurs de tension maximale et minimale. Ces consignes sont transmises au poste de transformation. Cela correspond à l'étape S10. Les étapes de régulation sont décrites dans le brevet français FR 3006819.

Enfin, lorsque la variation est inférieure à la valeur absolue du premier seuil U1, aucune action de régulation n'est entreprise car le module de la tension complexe en chaque nœud se trouve dans la bande de tensions réglementaire. Le procédé est stoppé à l'étape S12.

Le premier seuil U1 est par exemple égal à 10% de la valeur absolue de la tension cible, ces 10% correspondant à la valeur réglementaire en vigueur actuellement.. Le deuxième seuil U2 peut être égal à 15% de la valeur absolue de la tension cible.

Selon une réalisation, le procédé est relancé à chaque intervalle de temps, par exemple au moins égal à 30 minutes et de préférence égal à 10 minutes. Cela permet d'assurer le contrôle et la correction du cycle précédent. Notamment, il est possible que les flux d'énergie dans le réseau basse tension évoluent durant la mise en œuvre du procédé. Le procédé proposé permet dans tous les cas de réguler la tension sauf lorsqu'elle celle-ci présente des variations trop importantes supérieures au seuil U2 (surcharge du réseau ou potentielle instabilité du réseau) et alors ne permet pas le retour de l'état en tension dans la plage de tension contractuelle. L'intervalle de temps choisi permet de correspondre, d'une part, aux normes légales, et, d'autre part, de lisser des instabilités ponctuelles. Enfin, cet intervalle de temps permet la mise en œuvre complète du procédé de l'étape S1 à l'étape S12.

## Revendications

1. Procédé, mis en œuvre par des moyens informatiques, de détermination d'un état en tension d'un réseau de distribution d'électricité comprenant au moins une branche basse tension, et au moins une branche haute tension, la branche basse tension comprenant une pluralité de nœuds au niveau desquels ledit état en tension est à déterminer, la détermination dudit état en tension étant réalisée au niveau d'au moins un poste de transformation, la détermination de l'état en tension servant à réguler la tension sur le réseau basse tension, le procédé comprenant:

   - une définition d'une valeur d'une tension cible réelle pour chaque nœud, ladite tension cible réelle représentant la valeur en tension à atteindre par la régulation;
   - une estimation d'une puissance active et d'une puissance réactive pour chaque nœud ; **caractérisé en ce qu'**il comprend ensuite la mise en œuvre, par une unité de traitement, des étapes suivantes :

     - une construction d'un premier système d'équations de Kirchhoff liant des tensions complexes aux puissances actives et réactives de la pluralité de nœuds,
     - une formulation respective desdites puissances actives et réactives sous la forme d'une fonction quadratique pour chaque nœud, lesdites fonctions quadratiques liant des tensions complexes de la pluralité des nœuds à des matrices symétriques complexes issues d'une matrice d'admittance complexe du réseau, lesdites fonctions quadratiques étant substituées dans le premier système d'équations de manière à obtenir un deuxième système d'équations en nombre réels, équivalent au premier système d'équations,
     - une formulation d'un problème d'optimisation sous forme d'une fonction auxiliaire issue du deuxième système d'équations dont une solution optimale approchée, notamment un minimum global de ladite fonction auxiliaire, correspond à une solution du deuxième système d'équations,
     - une minimisation itérative de ladite fonction auxiliaire, dont une solution initiale à la première itération est la tension cible, jusqu'à obtenir une approximation du minimum global de ladite fonction auxiliaire représentant une solution au voisinage du minimum global de ladite fonction auxiliaire,
     - et une application au deuxième système d'équations d'une méthode itérative par linéarisations successives, ayant comme solution initiale à la première itération ledit minimum global approché, jusqu'à obtenir une valeur d'une tension complexe en chaque nœud.

2. Procédé, selon la revendication 1, comprenant en outre :

   - un calcul d'une variation entre la valeur de ladite tension cible réelle et la valeur d'un module de ladite tension complexe en chaque nœud; et

     ➢ si ladite variation est inférieure à une valeur absolue d'un premier seuil, aucune action de régulation n'est entreprise,

     ➢ si ladite variation en valeur absolue est comprise entre le premier seuil et le deuxième seuil, la valeur absolue du deuxième seuil étant supérieure à la valeur absolue du premier seuil, une détermination de consignes de tension à appliquer au poste de transformation du réseau de manière à ramener la tension complexe en chaque nœud de la branche basse tension entre des valeurs de contrainte de tension maximale et minimale ; et une transmission des consignes de tension au poste de transformation,

➤ si ladite variation en valeur absolue est supérieure au deuxième seuil, le procédé est relancé.

3. Procédé selon la revendication 2, dans lequel :

➤ la valeur absolue du premier seuil est égale à 10% de la valeur de la tension cible réelle, et

➤ la valeur absolue du deuxième seuil est égale à 15% de la valeur de la tension cible réelle.

4. Procédé, selon l'une des revendications 1 à 3, dans lequel les puissances actives et réactives en chaque nœud de la branche basse tension sont déterminées :

- en fonction de mesures réelles fournies par au moins un compteur électrique relié au nœud associé de la branche basse tension, ou
- en fonction d'un modèle de charge de consommateurs.

5. Procédé selon l'une des revendications 1 à 4, **caractérisé en ce que** les étapes du procédé sont répétées à chaque intervalle de temps, de préférence inférieur à trente minutes, et de préférence inférieur à dix minutes.

6. Procédé selon l'une des revendications 1 à 5, dans lequel la fonction auxiliaire est choisie de sorte qu'un minimum global de valeur 0 de ladite fonction auxiliaire est une solution du deuxième système d'équations, ladite fonction auxiliaire étant à valeur réelle positive ou nulle.

7. Procédé selon la revendication 6, dans lequel une résolution du deuxième système d'équations comprend la minimisation de la fonction auxiliaire par une méthode itérative comprenant, à chaque itération, une recherche d'une direction de descente puis une minimisation unidimensionnelle de la fonction auxiliaire jusqu'à obtenir la solution au voisinage du minimum global.

8. Procédé selon la revendication 7, dans lequel la direction de descente est trouvée, à chaque itération, par une résolution d'un problème d'optimisation à objectif quadratique convexe sous contraintes linéaires.

9. Procédé selon l'une des revendications 1 à 8, dans lequel la méthode itérative de linéarisations successives comprend, à chaque itération :

➤ une résolution d'une approximation linéaire du deuxième système d'équations au voisinage d'une solution obtenue à l'itération précédente, laquelle définit une direction de déplacement dans l'espace des solutions, et

➤ une minimisation unidimensionnelle de la fonction auxiliaire dans cette direction de déplacement.

10. Procédé selon l'une des revendications 1 à 9, dans lequel la valeur de la tension complexe est obtenue avec un degré de précision compris entre $10^{-6}$ et $10^{-15}$.

11. Procédé selon l'une des revendications 1 à 10, **caractérisé en ce que** les nombres d'itérations pour la résolution de la fonction auxiliaire et d'itérations de la méthode de linéarisations successives sont chacun inférieurs à 20, de préférence inférieurs à 15, et de préférence égaux à 12.

12. Système de détermination d'un état en tension d'un réseau de distribution d'électricité comprenant au moins une branche basse tension, et au moins une branche haute tension, la branche basse tension comprenant une pluralité de nœuds au niveau desquels ledit état en tension est à déterminer, la détermination dudit état en tension étant réalisée au niveau d'au moins un poste de transformation, la détermination dudit état en tension servant à réguler la tension sur le réseau basse tension, le système étant **caractérisé par**:

- un circuit de traitement configuré pour la mise en œuvre du procédé selon l'une des revendications 1 à 11.

**Patentansprüche**

1. Verfahren, welches durchgeführt wird mittels Computermitteln, zum Bestimmen eines Spannungszustands eines Elektrizitätsverteilungsnetzes, welcher wenigstens einen Niederspannungszweig und wenigstens einen Hochspannungszweig umfasst, wobei der Niederspannungszweig eine Mehrzahl von Knoten umfasst, an denen der Spannungszustand zu bestimmen ist, wobei die Bestimmung des Spannungszustands an wenigstens einer Transformatorstation durchgeführt wird, wobei die Bestimmung des Spannungszustands dazu dient, die Spannung auf dem Niederspannungsnetz zu regeln, wobei das Verfahren umfasst:

- Definition eines Wertes einer tatsächlichen Zielspannung für jeden Knoten, wobei die tatsächliche Zielspannung den durch die Regelung zu erreichenden Spannungswert darstellt;
- Schätzung einer Wirkleistung und einer Blindleistung für jeden Knoten; **dadurch gekennzeichnet, dass** diese dann die Durchführung der folgenden Schritte durch eine Verarbeitungseinheit umfasst:

- Konstruktion eines ersten Systems von Kirchhoff-Gleichungen, das komplexe Spannungen mit den Wirk- und Blindleistungen der Mehrzahl von Knoten verknüpft,
- eine jeweilige Formulierung der Wirk- und Blindleistungen in Form einer quadratischen Funktion für jeden Knoten, wobei die quadratischen Funktionen komplexe Spannungen der Mehrzahl von Knoten mit komplexen symmetrischen Matrizen verknüpfen, die von einer komplexen Admittanzmatrix des Netzwerks stammen, wobei die quadratischen Funktionen in das erste Gleichungssystem substituiert werden, um ein zweites Gleichungssystem in reellen Zahlen zu erhalten, das dem ersten Gleichungssystem entspricht,
- Formulierung eines Optimierungsproblems in Form einer Hilfsfunktion, die von dem zweiten Gleichungssystem stammt, deren angenäherte optimale Lösung, insbesondere ein Gesamtminimum der genannten Hilfsfunktion, einer Lösung des zweiten Gleichungssystems entspricht,
- iterative Minimierung der genannten Hilfsfunktion, deren Anfangslösung bei der ersten Iteration die Zielspannung ist, bis eine Annäherung an das globale Minimum der Hilfsfunktion erhalten wird, die eine Lösung in der Nähe des globalen Minimums der genannten Hilfsfunktion darstellt,
- und Anwendung eines iterativen Verfahrens auf das zweite Gleichungssystem durch aufeinanderfolgende Linearisierungen, wobei als Anfangslösung der ersten Iteration das globale Minimum angenähert wird, bis ein Wert einer komplexen Spannung an jedem Knoten erhalten wird.

2. Verfahren nach Anspruch 1, ferner umfassend:

- Berechnen einer Variation zwischen dem Wert der tatsächlichen Zielspannung und dem Wert eines Moduls der komplexen Spannung an jedem Knoten; und

➢ wenn diese Abweichung kleiner als ein Absolutwert eines ersten Schwellenwertes ist, werden keine regulatorischen Maßnahmen ergriffen,

➢ wenn die Abweichung des Absolutwertes zwischen dem ersten Schwellenwert und dem zweiten Schwellenwert liegt, wobei der Absolutwert des zweiten Schwellenwertes größer ist als der Absolutwert des ersten Schwellenwertes, Bestimmen eines Spannungssollwerts, der an einer Transformatorstation des Netzes anzulegen ist, um die komplexe Spannung an jedem Knoten des Niederspannungszweiges zwischen maximalen und minimalen Spannungsbelastungswerten zu reduzieren; und Übertragen des Spannungssollwerts an die Transformatorstation,

➢ wenn die besagte Abweichung im Absolutwert größer ist als der zweite Schwellenwert, wird der Vorgang wiederholt.

3. Verfahren nach Anspruch 2, wobei:

➢ der Absolutwert des ersten Schwellenwertes gleich 10 % des Wertes der tatsächlichen Zielspannung ist, und

➢ der Absolutwert des zweiten Schwellenwertes gleich 15 % des Wertes der tatsächlichen Zielspannung ist.

4. Verfahren nach einem der Ansprüche 1 bis 3, wobei die Wirk- und Blindleistungen an jedem Knoten des Niederspannungszweigs ermittelt werden:

- in Abhängigkeit von tatsächlichen Messwerten, die von wenigstens einem an den zugehörigen Knoten des Niederspannungszweigs angeschlossenen Stromzähler geliefert werden, oder
- basierend auf einem Verbraucherlastmodell.

5. Verfahren nach einem der Ansprüche 1 bis 4, **dadurch gekennzeichnet, dass** die Schritte des Verfahrens in jedem Zeitintervall, bevorzugt kleiner dreißig Minuten, und bevorzugt kleiner zehn Minuten, wiederholt werden.

**6.** Verfahren nach einem der Ansprüche 1 bis 5, wobei die Hilfsfunktion derart gewählt wird, dass ein Gesamtminimum des Wertes 0 der Hilfsfunktion eine Lösung des zweiten Gleichungssystems ist, wobei die Hilfsfunktion einen positiven Wert oder tatsächlichen Wert gleich Null hat.

**7.** Verfahren nach Anspruch 6, wobei eine Lösung des zweiten Gleichungssystems das Minimieren der Hilfsfunktion durch ein iteratives Verfahren umfasst, das bei jeder Iteration die Suche nach einer absteigenden Richtung und dann das eindimensionale Minimieren der Hilfsfunktion umfasst, bis die Lösung in der Nähe des globalen Minimums erhalten wird.

**8.** Verfahren nach Anspruch 7, wobei die Richtung des Absinkens bei jeder Iteration durch Lösen eines Optimierungsproblems mit einem konvexen quadratischen Ziel unter linearen Bedingungen gefunden wird.

**9.** Verfahren nach einem der Ansprüche 1 bis 8, wobei das iterative Verfahren der aufeinanderfolgenden Linearisierungen bei jeder Iteration umfasst:

- eine Auflösung einer linearen Approximation des zweiten Gleichungssystems in der Nähe einer in der vorhergehenden Iteration erhaltenen Lösung, die eine Richtung der Verschiebung im Lösungsraum definiert, und
- eine eindimensionale Minimierung der Hilfsfunktion in dieser Verschiebungsrichtung.

**10.** Verfahren nach einem der Ansprüche 1 bis 9, wobei der Wert der komplexen Spannung mit einem Genauigkeitsgrad zwischen $10^{-6}$ und $10^{-15}$ erhalten wird.

**11.** Verfahren nach einem der Ansprüche 1 bis 10, **dadurch gekennzeichnet, dass** die Anzahl der Iterationen zur Auflösung der Hilfsfunktion und der Iterationen des sukzessiven Linearisierungsverfahrens jeweils kleiner als 20, bevorzugt kleiner als 15 und bevorzugt gleich 12 ist.

**12.** System zum Bestimmen eines Spannungszustands eines Elektrizitätsverteilungsnetzes, welches wenigstens einen Niederspannungszweig und wenigstens einen Hochspannungszweig umfasst, wobei der Niederspannungszweig eine Mehrzahl von Knoten umfasst, an denen der Spannungszustand zu bestimmen ist, wobei die Bestimmung des Spannungszustands an wenigstens einer Transformatorstation durchgeführt wird, wobei die Bestimmung des Spannungszustands dazu dient, die Spannung im Niederspannungsnetz zu regeln, wobei das System **gekennzeichnet ist durch**:

- eine Verarbeitungsschaltung, die zur Durchführung des Verfahrens nach einem der Ansprüche 1 bis 11 ausgebildet ist.

**Claims**

**1.** Method, implemented by computer means, for determining a voltage state of a power supply network comprising at least one low-voltage branch, and at least one high-voltage branch, the low-voltage branch comprising a plurality of nodes at which said voltage state is to be determined, the determination of said voltage state being performed at at least one transformer station, the determination of the voltage state being used to regulate the voltage on the low-voltage network, the method comprising:

- a definition of a value of a real target voltage for each node, said real target value representing the voltage value to be reached by the regulation;
- an estimation of an active power and of a reactive power for each node; **characterised in that** it subsequently comprises the implementation, by a processing unit, of the following steps:

- constructing a first system of Kirchhoff equations linking complex voltages to the active and reactive powers of the plurality of nodes,
- respectively formulating said active and reactive powers in the form of a quadratic function for each node, said quadratic functions linking complex voltages of the plurality of nodes to complex symmetrical matrices from a complex admittance matrix of the network, said quadratic functions being substituted in the first system of equations in such a way as to obtain a second system of equations in real numbers, equivalent to the first system of equations,

- formulating an optimisation problem in the form of an auxiliary function from the second system of equations, whereof an approached optimum solution, in particular a global minimum of said auxiliary function, corresponds to a solution of the second system of equations,
- iteratively minimising said auxiliary function, whereof an initial solution to the first iteration is the target voltage, until an approximation is obtained of the global minimum of said auxiliary function representing a solution close to the global minimum of said auxiliary function,
- and applying to the second system of equations an iterative method by successive linearisations, having as initial solution to the first iteration said approached global minimum, until a value of a complex voltage is obtained in each node.

2. Method, according to claim 1, further comprising:

- a calculation of a variation between the value of said real target voltage and the value of a module of said complex voltage in each node; and

-- if said variation is less than an absolute value of a first threshold, no regulation action is undertaken,
-- if said variation in absolute value is between the first threshold and the second threshold, the absolute value of the second threshold being greater than the absolute value of the first threshold, a determination of voltage set points to be applied to the transformer station of the network in such a way as to bring back the complex voltage in each node of the low-voltage branch between maximum and minimum voltage stress values; and a transmission of the stress set points to the transformer station,
-- if said variation in absolute value is greater than the second threshold, the method is relaunched.

3. Method according to claim 2, wherein:

- the absolute value of the first threshold is equal to 10% of the value of the real target voltage, and
- the absolute value of the second threshold is equal to 15% of the value of the real target voltage.

4. Method, according to one of claims 1 to 3, wherein the active and reactive powers in each node of the low voltage branch are determined:

- depending on real measurements provided by at least one electric meter connected to the node associated with the low voltage branch, or
- depending on a consumer charging model.

5. Method according to one of claims 1 to 4, **characterised in that** the steps of the method are repeated at each time interval, preferably less than thirty minutes, and preferably less than ten minutes.

6. Method according to one of claims 1 to 5, wherein the auxiliary function is selected so that a global minimum of value 0 of said auxiliary function is a solution of the second system of equations, said auxiliary function being at positive or zero real value.

7. Method according to claim 6, wherein a resolution of the second system of equations comprises the minimisation of the auxiliary function by an iterative method comprising, at each iteration, a search for a downward direction then a unidimensional minimisation of the auxiliary function until the solution close to the global minimum is obtained.

8. Method according to claim 7, wherein the downward direction is found, at each iteration, by a resolution of a problem of convex quadratic objective optimisation under linear stresses.

9. Method according to one of claims 1 to 8, wherein the iterative method of successive linearisations comprises, at each iteration:

- a resolution of a linear approximation of the second system of equations close to a solution obtained at the preceding iteration, which defines a direction of movement in the space of the solutions, and
- a unidimensional minimisation of the auxiliary function in this direction of movement.

10. Method according to one of claims 1 to 9, wherein the value of the complex voltage is obtained with one degree of

precision between $10^{-6}$ and $10^{-15}$.

11. Method according to one of claims 1 to 10, **characterised in that** the number of iterations for the resolution of the auxiliary function and of iterations of the method of successive linearisations are each less than 20, preferably less than 15, and preferably equal to 12.

12. System for determining a voltage state of a power supply network comprising at least one low-voltage branch, and at least one high-voltage branch, the low-voltage branch comprising a plurality of nodes at which said voltage state is to be determined, the determination of said voltage state being performed at at least one transformer station, the determination of said voltage state being used to regulate the voltage on the low-voltage network, the system being **characterised by**:

- a processing circuit configured to implement the method according to one of claims 1 to 11.

FIG. 1

FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 33006819
- US 2012022713 A
- US 2018158152 A
- EP 2874273 A
- US 2005160128 A
- US 2007203658 A
- US 2017141572 A
- FR 3006819